**Europäisches Patentamt**

**European Patent Office**

**Office européen des brevets**

(19)

(11) Numéro de publication: **0 198 739**
**A1**

(12) ## DEMANDE DE BREVET EUROPEEN

(21) Numéro de dépôt: **86400582.2**

(22) Date de dépôt: **19.03.86**

(51) Int. Cl.⁴: **G 06 K 7/06**

(30) Priorité: **26.03.85 FR 8504493**

(43) Date de publication de la demande: **22.10.86**
**Bulletin 86/43**

(84) Etats contractants désignés: **DE GB IT SE**

(71) Demandeur: **SOCAPEX, 10 bis, quai Léon Blum,**
**F-92153 Suresnes (FR)**

(72) Inventeur: **Colin, Patrick, Le Clos des Vignes Chemin**
**des Marmottées, F-74200 Thonon-les-Bains (FR)**
Inventeur: **Fiammingo, Daniel, Combaz-Coinchat,**
**F-74200 Thonon-les-Bains (FR)**

(74) Mandataire: **Brullé, Jean et al, Service Brevets**
**Bendix 44, rue François 1er, F-75008 Paris (FR)**

(54) **Système de connexion pour cartes individuelles pour système de traitement de signaux.**

(57) La présente invention concerne un système de connexion pour carte dite «à mémoire».

Conformément à l'invention, le système de connexion comporte une platine-support (1) sur laquelle est positionnée la carte (2) et une pièce (3) susceptible de venir en connexion avec une face de la carte. La pièce (3) est montée pivotante autour d'un axe (11, 11') parallèle à la platine-support pour pouvoir prendre respectivement une position d'ouverture permettant la mise en place de la carte (2) et une position de fermeture mettant la pièce (3) en contact avec la carte, la pièce étant normalement maintenue dans sa position d'ouverture par un dispositif de rappel (14) et comportant une partie en saillie (13) contre laquelle vient s'appuyer un des bords de la carte (2) pour la faire basculer en position de fermeture, la platine-support comportant une butée (15) maintenant l'objet en position pendant la fermeture de la pièce.

L'invention est utilisée notamment dans les lecteurs de cartes à mémoire.

# SYSTEME DE CONNEXION POUR CARTES INDIVIDUELLES
## POUR SYSTEME DE TRAITEMENT DE SIGNAUX

La présente invention concerne les systèmes de connexion, pour cartes individuelles pour système de traitement de signaux telles que les cartes dites "à mémoire" ou similaires.

De telles cartes individuelles sont, en général, utilisées pour donner au titulaire de la carte un accès réservé à un système central d'informations, comme moyen d'interconnexion entre un dispositif électronique solidaire de la carte contenant des informations personnalisées et ledit système central. Des connecteurs, de type particulier, sont alors utilisés pour interconnecter la carte et le système.

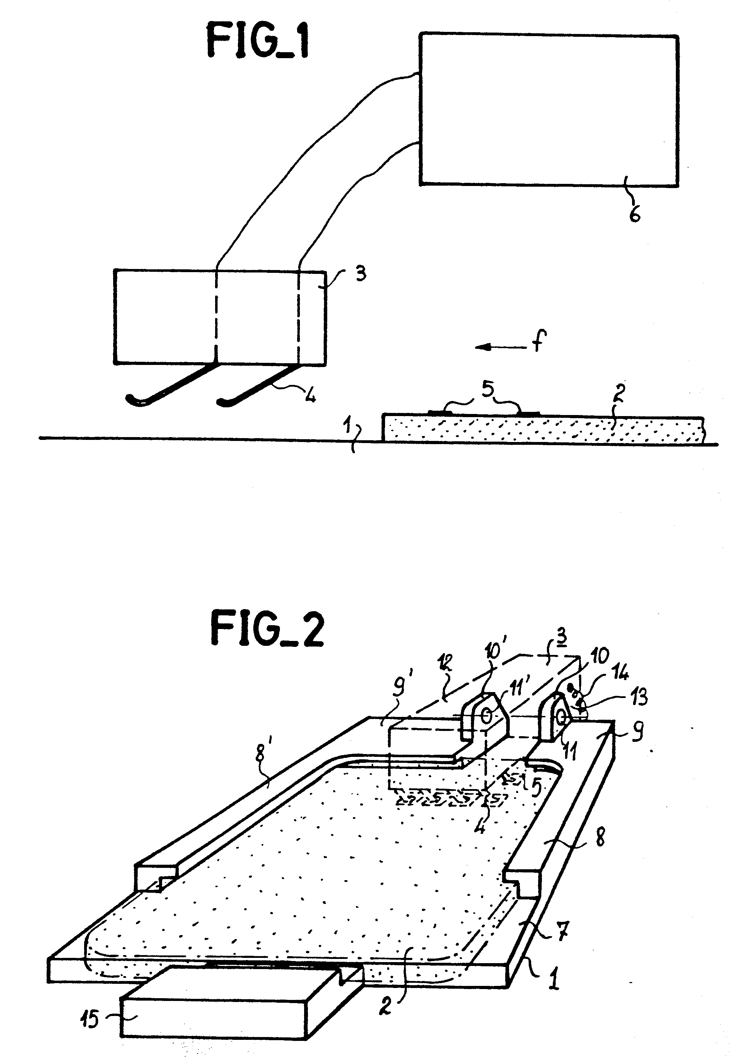

Dans le cas des cartes individuelles du type cartes à mémoire, c'est-à-dire des cartes comportant des pistes de sortie donnant accès à un dispositif à circuits intégrés incorporant une mémoire et fixé sur la carte, les connecteurs actuellement utilisés comportent, comme représenté schématiquement sur la figure 1, une platine-support 1 destinée à recevoir la carte 2 et une pièce 3 portant des contacts électriques constitués de préférence par des lames élastiques 4 en saillie vers la platine-support. La pièce 3 est positionnée parallèlement à la platine-support 1 du côté opposé au côté d'introduction de la carte 2. Lors de l'utilisation de la carte, celle-ci est introduite par l'utilisateur sur la platine-support 1 et poussée dans la direction de la flèche f pour que les pistes 5 de sortie de la carte 2 viennent en contact avec les contacts élastiques 4.

Dans ce cas, la mise en pression des contacts électriques 4 sur les pistes 5 de sortie est obtenue par flexion desdites contacts résultant de l'avance de la carte sur la platine-support.

Les connecteurs de ce type présentent un certain nombre d'inconvénients. En particulier, on observe une usure relativement rapide des pistes et des contacts électriques due aux frottements occasionnés par chaque manoeuvre. Cette usure risque d'altérer la qualité du contact électrique. D'autre part, le positionnement exact des contacts électriques sur les bornes de sortie est particulièrement difficile lorsque lesdites pistes n'occupent qu'une faible partie de la surface de la carte.

On a aussi envisagé d'utiliser des connecteurs dont la pièce portant les contacts est mobile autour d'un axe. Toutefois, de tels connecteurs ne sont pas utilisés en pratique car il se pose un problème de maintien du connecteur en position de fermeture.

La présente invention a pour but de remédier de manière simple aux inconvénients ci-dessus.

Le dispositif, objet de l'invention est composé d'une platine-support sur laquelle est positionné la carte individuelle et une pièce susceptible de venir en contact avec une face de la carte caractérisé en ce que ladite pièce est montée pivotante autour d'un axe parallèle à la platine-support pour pouvoir prendre respectivement une position d'ouverture permettant la mise en place de la carte et une position de fermeture mettant la pièce en contact avec la carte, la pièce étant normalement maintenue dans sa position d'ouverture par un dispositif de rappel et comportant une partie en saillie contre laquelle vient s'appuyer un des bords de la carte pour la faire basculer en position de fermeture, la platine-support comportant une butée maintenant la carte en position pendant la fermeture de la pièce.

Selon un mode de réalisation préférentiel de la pièce mobile, celle-ci présente une section en coupe en forme de L, l'une des branches du L formant la partie en saillie. D'autre part, lorsque la carte individuelle est constituée notamment par une carte du type à mémoire, la pièce mobile comporte des contacts électriques positionnés pour venir en contact avec des pistes correspondantes prévues sur la carte lorsque la pièce est au moins dans sa position de fermeture. Les contacts électriques sont de préférence constitués par des lames souples ayant respectivement une extrémité solidaire de la pièce et une extrémité libre, de contact.

D'autre part, différents modes de réalisation peuvent être envisagés pour la butée maintenant la carte individuelle en position sur la platine-support pendant la fermeture de la pièce. Ainsi, la butée peut être solidaire de la platine-support ou bien elle peut être réglable par rapport à ladite platine. Dans ce cas, elle peut être constituée par une pièce en L comportant un trou oblong venant se fixer sous la platine-support. La butée est positionnée du côté selon lequel est insérée la carte et elle présente une hauteur déterminée afin de permettre sa mise en place en jouant sur son élasticité. En général, cette hauteur sera inférieure à l'épaisseur de la carte.

De plus, le dispositif de rappel est, de préférence, constitué par un ressort hélicoïdal. Toutefois, tout dispositif de rappel connu peut être envisagé.

Selon une autre caractéristique de la présente invention, la platine-support comporte des moyens de guidage de la carte individuelle. Ces moyens de guidage sont, de préférence, constitués par deux glissières latérales.

D'autres caractéristiques et avantages de la présente invention apparaîtront à la lecture de la description de divers modes de réalisation faite ci-après avec référence aux dessins ci-annexés dans lesquels :

- la figure 1, déjà décrite, est une représentation schématique d'un système de connexion de l'art antérieur;

- la figure 2 est une vue en perspective d'un système de connexion conforme à la présente invention ;

- la figure 3 est une vue en perspective fragmentaire d'un premier mode de réalisation de la butée;

- les figures 4a et 4b sont respectivement une vue en perspective fragmentaire et une vue en coupe d'un deuxième mode de réalisation de la butée;

- les figures 5a et 5b sont des schémas expliquant le fonctionnement du système de connexion de la présente invention.

Dans les figures, les mêmes références désignent les mêmes éléments.

D'autre part, la présente invention sera décrite en se référant à une carte à mémoire. Toutefois, il est évident pour l'homme de l'art que le système de connexion de la présente invention peut être utilisé pour d'autres types de cartes destinés ou non à être connectés électriquement tels que par exemple les substrats d'interconnexion de dispositifs électroniques ou d'autres types de cartes, de billets ou de tickets.

Comme représenté sur la figure 2, le système de connexion conforme à la présente invention est constitué principalement par une platine-support 1 sur laquelle est positionnée la carte à mémoire 2 et une pièce mobile 3 susceptible de venir en contact avec une face de la carte. Dans le mode de réalisation représenté, la platine-support 1 est constituée essentiellement par une plaque rectangulaire 7 comportant deux moyens de guidage latéraux 8, 8' constitués par des profilés en L formant glissières pour recevoir les deux bords latéraux de la carte. Les glissières se prolongent sur le côté opposé au côté d'insertion de la carte de manière à constituer des logements 9, 9' formant butée pour la carte. Entre les deux logements 9, 9', est prévue une ouverture destinée à recevoir la pièce mobile 3. De manière plus détaillée, le bord de chaque logement 9, 9' est muni d'une pièce en forme d'oreille 10, 10'. Ces deux pièces 10, 10' sont munies d'orifices pour recevoir des bouts d'axe 11, 11' parallèles à la platine-support 1 formant l'axe de rotation de la pièce 3.

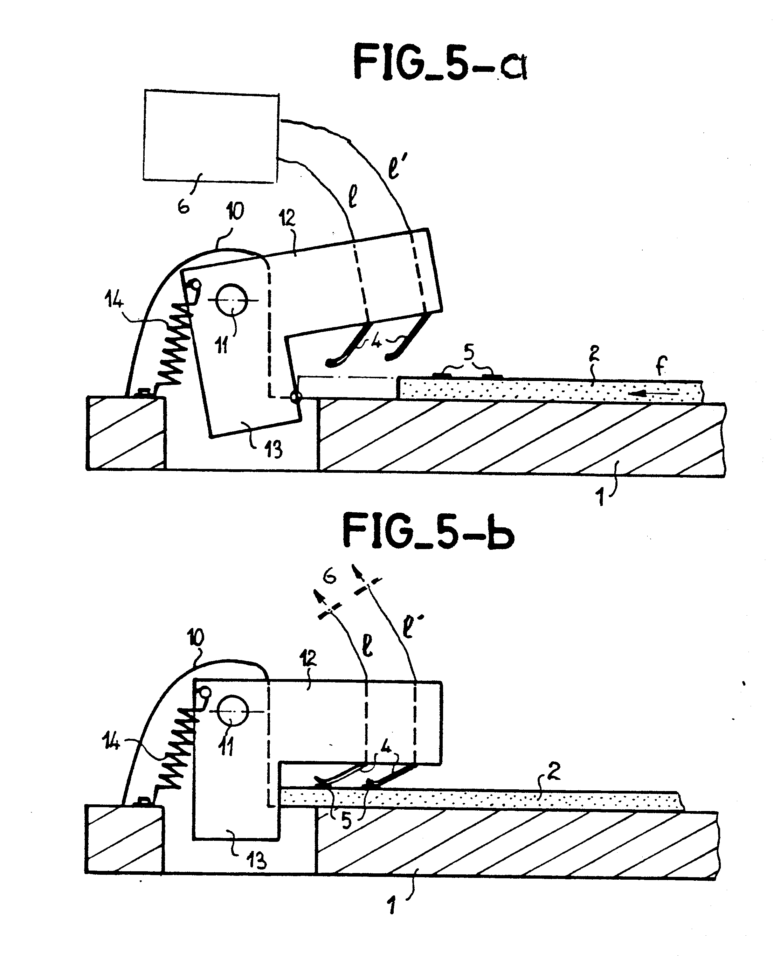

Comme représenté sur les figures 2 et 5, la pièce mobile 3 présente une section en coupe en forme de L. La branche 12 la plus longue est parallèle à la platine 1 et porte des contacts électriques 4 tandis que l'autre branche 13 est positionnée dans l'ouverture prévue entre les deux logements 9, 9' et forme une butée contre laquelle vient s'appuyer le bord de la carte 2 pour faire basculer la pièce 3 en position de fermeture comme cela sera expliqué de manière plus détaillée ci-après. Les axes 11, 11' solidaires de la pièce 3 sont positionnés sensiblement au croisement des deux branches. Les contacts électriques 4 sont constitués, comme pour le mode de réalisation de la figure 1 par des lames élastiques conductrices dont

0198739

5

une extrémité est solidaire de la pièce 3 et dont l'autre extrémité est libre. Les lames sont reliées à des moyens d'interconnexion de type connu, symbolisés par les lignes l, l' sur les figures 5a et 5b, pour relier le système de connexion à un dispositif de traitement des informations 6.

D'autre part, un dispositif de rappel constitué par un ressort à boudin 14 dans le mode de réalisation représenté, est fixé entre un point de la pièce mobile proche du point de croisement des deux branches et un point de la platine-support, de manière à rappeler la pièce mobile dans la position d'ouverture ou position de repos.

Conformément à la présente invention, la platine-support est munie, du côté entrée de la carte, d'une butée 15 qui maintient la carte en position lorsque le système de connexion est fermé.

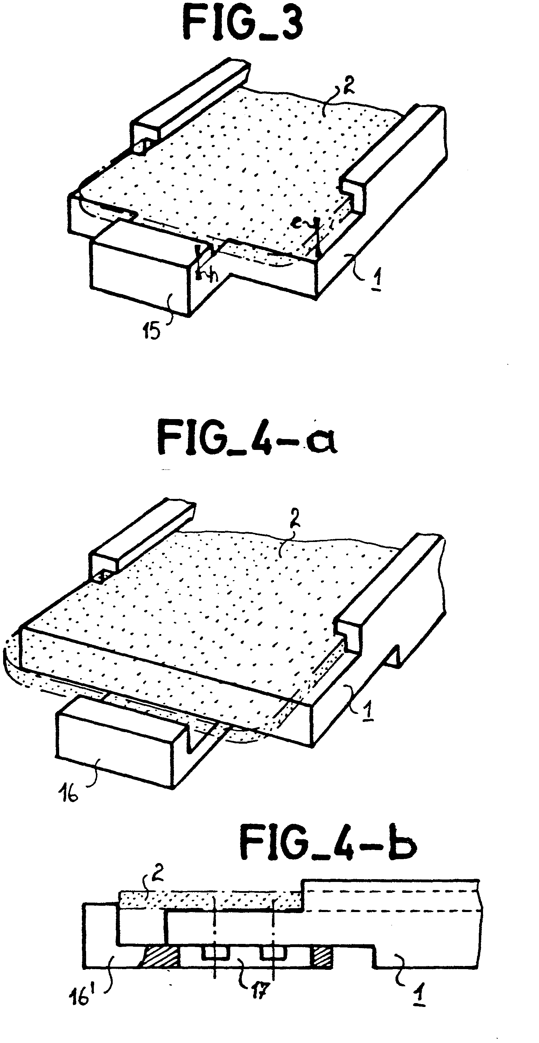

Comme représenté sur les figures 2 et 3, la butée 15 est solidaire de la platine-support et de préférence moulée avec elle, la platine-support ainsi que la pièce mobile étant généralement réalisées en matière plastique.

Selon un autre mode de réalisation représenté aux figures 4a et 4b, la butée peut être une butée 16 réglable en fonction de la longueur de la carte, constituée par une pièce en L comportant un trou oblong 17. Cette butée vient se fixer sous la platine par l'intermédiaire de moyens de fixation traversant le trou oblong.

L'élasticité de la carte qui est, en général, réalisée en une matière semi-rigide telle qu'une résine époxy, permet l'introduction de la carte sur la platine-support 1 sans être gêné par la hauteur de la butée. Toutefois, dans le mode de réalisation représenté, la hauteur h de la butée est inférieure à l'épaisseur de la carte.

On expliquera maintenant le fonctionnement du système de connexion conforme à la présente invention en se référant plus particulièrement aux figures 5a et 5b. Ainsi, lorsqu'aucune carte n'est insérée dans le système de connexion, la pièce mobile 3 se trouve maintenue en position ouverte comme représenté sur la figure 5a. Lorsque l'on insère la carte 2 dans le système de connexion en la poussant selon la direction de la flèche f sur la platine 1, la carte 2 arrive en contact contre le bras 13 de la pièce 3. Si l'on continue à pousser la carte dans la même direction, on exerce sur le bras 13 une force qui s'oppose à la force de rappel du ressort 14 et qui fait basculer la pièce 3 autour de l'axe 11, 11' de manière à amener les bornes électriques 4 sur les pistes de sortie 5 de la carte 2. Le système de connexion se trouve alors en position de fermeture ou position de travail comme représenté sur la figure 5b. A ce moment, la carte 2 est complètement insérée sur la platine-support 1 et le bord de carte opposé au bord portant les plots se trouve en butée contre la butée 15 comme représenté sur la figure 2. L'opérateur n'a plus besoin d'exercer une force sur la carte qui est alors maintenue en position contre la force de rappel du ressort 14 qui, normalement, tend à ramener le système de connexion dans sa position de repos en repoussant la carte. Grâce à la butée 15, la position de fermeture ou de travail du système de connexion est une position stable.

Pour retirer la carte, il suffit de lui faire franchir la hauteur h de la butée 15, ensuite elle sera repoussée hors de la platine-support, suite à l'action du dispositif de rappel. Cette opération peut être réalisée manuellement, l'opérateur prenant la carte et lui faisant franchir la hauteur h de la butée. Toutefois, on peut aussi envisager un dispositif automatique tel qu'un dispositif électromécanique qui serait mis en oeuvre par le dispositif de traitement une fois l'opération terminée.

On obtient donc un système de connexion pour carte individuelle de conception simple, comprenant peu de pièces et ne présentant pas les inconvénients des systèmes de l'art antérieur.

REVENDICATIONS

1. Système de connexion pour la lecture d'une carte individuelle (2) dont une face repose sur une platine-support (1) et dont l'autre face comporte des pistes (5) de sortie, le système comportant une pièce (3) mobile portant des contacts électriques souples (4) susceptibles de venir en connexion avec les pistes (5) une fois la carte positionnée, ladite pièce (3) étant montée pivotante autour d'un axe (11-11') parallèle au plan de la platine-support (1) et perpendiculaire au sens d'insertion de la carte pour pouvoir prendre respectivement une position d'ouverture permettant l'insertion de la carte et une position de fermeture correspondant à l'application des contacts (4) sur les pistes (5) caractérisé en ce que la pièce mobile se présente sous la forme d'une équerre en L avec une branche sensiblement horizontale 12 surplombant la carte et une branche sensiblement verticale 13 interceptée par le bord aval de la carte (2) qui la fait pivoter en position de fermeture à l'encontre d'un ressort antagoniste (14), le bord amont de la carte (2) coopérant alors avec une butée (15,16) de positionnement portée par la platine-support (1).

2. Système de connexion selon la revendication 1, caractérisé en ce que la butée (16) est une butée réglable par rapport à la platine-support (1).

3. Système de connexion selon l'une quelconque des revendications 1 ou 2, caractérisé en ce que la platine-support comporte au moins un moyen de guidage (8,8') de la carte dans le sens de son insertion.

4. Système de connexion selon la revendication 3, caractérisé en ce que le moyen de guidage (8,8') est constitué par deux glissières latérales.

5. Système de connexion selon l'une des revendications précédentes caractérisé en ce que la butée (15,16) a une hauteur inférieure à l'épaisseur de la carte (2).

**FIG_1**

**FIG_2**

0198739

# FIG_3

# FIG_4-a

# FIG_4-b

## FIG_5-a

## FIG_5-b

## Office européen des brevets
## RAPPORT DE RECHERCHE EUROPEENNE

EP 86 40 0582

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. CI.4) |
|---|---|---|---|
| Y | WO-A-7 900 543 (MORENO) <br> * Figures 1-4; page 3, ligne 37 - page 5, ligne 39 * | 1,3,4 | G 06 K 7/06 |
| | --- | | |
| Y | FR-A-2 492 213 (LEP) <br> * Figures 3-8,11; page 3, ligne 1 - page 5, ligne 4 * | 1,3,4 | |
| | --- | | |
| Y | FR-A-2 463 455 (CII-HB) <br> * Figures 1,2; page 4, ligne 2 - page 6, ligne 38 * | 1 | |
| | --- | | |
| A | DE-A-3 235 654 (SIEMENS) <br> * Figures 1-3; page 7, ligne 28 - page 10, ligne 7 * | 1,3 | |
| | --- | | DOMAINES TECHNIQUES RECHERCHES (Int. CI.4) |
| A | FR-A-2 477 303 (DASSAULT) <br> * Figures 1-7; page 3, ligne 14 - page 5, ligne 9 * | 1,3 | G 06 K |
| | ----- | | |

Le présent rapport de recherche a été établi pour toutes les revendications

| Lieu de la recherche | Date d'achèvement de la recherche | Examinateur |
|---|---|---|
| LA HAYE | 16-07-1986 | FORLEN G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82